Europäisches Patentamt

European Patent Office

Office européen des brevets

(19)

(11) Veröffentlichungsnummer : **0 017 799**
**B1**

(12) **EUROPÄISCHE PATENTSCHRIFT**

(45) Veröffentlichungstag der Patentschrift :
17.10.84

(21) Anmeldenummer : 80101537.1

(22) Anmeldetag : 24.03.80

(51) Int. Cl.³ : **C 11 D 3/22, C 11 D 11/02**

(54) **Verfahren zum Herstellen von kaltwasserlösliche Celluloseether enthaltenden Slurries für Wasch- und Reinigungsmittel.**

(30) Priorität : 29.03.79 DE 2912486

(43) Veröffentlichungstag der Anmeldung :
29.10.80 Patentblatt 80/22

(45) Bekanntmachung des Hinweises auf die Patenterteilung : 17.10.84 Patentblatt 84/42

(84) Benannte Vertragsstaaten :
AT BE CH DE FR GB LU

(56) Entgegenhaltungen : .
DE-A- 811 015
FR-A- 856 134
FR-A- 1 041 848
GB-A- 1 498 520
US-A- 4 048 433
CHEMICAL ABSTRACTS, Band 85, Nr. 6, August 1976,
Zusammenfassung Nr. 34903s, Seite 108, Columbus,
Ohio, US

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Ziche, Horst**
**Am Falder 20**
**D-4000 Düsseldorf 13 (DE)**

**Beschreibung**

Gegenstand der Erfindung ist ein neuartiges Verfahren zur Herstellung von an sich bekannten Slurries, aus denen durch Sprühtrocknung Wasch- und Reinigungsmittel gewonnen werden. Derartige Zusammensetzungen enthalten häufig als Schmutzträger wasserlösliche Celluloseether.

Technische Celluloseether, wie zum Beispiel Methylcellulose, Ethylcellulose und Cellulose-mischether, wie zum Beispiel Methylhydroxy-propylcellulose, Methylhydroxyethylcellulose, Methylhydroxybutylcellulose usw. enthalten aufgrund ihrer Herstellung durch Umsetzen von Alkalicellulosen mit halogenhaltigen Alkylierungsmitteln, wie zum Beispiel Methylchlorid oder Ethylchlorid beträchtliche Mengen an Alkalihalogeniden, insbesondere Natriumchlorid, die bis zu 50 Gewichtsprozent des Rohproduktes ausmachen können. Für die meisten Verwendungszwecke ist der Gehalt an Alkalihalogenid störend, so daß die rohen Celluloseether von Alkalihalogenid befreit werden müssen. Man macht sich dabei die Tatsache zunutze, daß die Celluloseether zwar im kalten Wasser, jedoch nicht im heißen Wasser löslich sind und wäscht die Alkalisalze, insbesondere Kochsalz, mit heißem Wasser aus. Nach dem Abtrennen der Waschflüssigkeit werden die so gereinigten Produkte getrocknet und zu Pulver gemahlen oder zu einem Granulat aufgearbeitet.

Auch bei der Herstellung von Slurries für Wasch- und Reinigungsmittel wird ein — wie vorstehend beschrieben — gereinigter Celluloseether, insbesondere Methylcellulose, eingesetzt. Ein Gehalt an Alkalihalogenid, beispielsweise Natriumchlorid, kann nämlich insbesondere bei höheren Temperaturen deutliche Korrosion an Metallteilen verursachen.

Aufgabe der Erfindung war es, das bekannte energie- und damit kostenaufwendige Reinigungsverfahren für Celluloseether zu ersetzen. Ein Ziel der Erfindung war es, ein Reinigungsverfahren zu entwickeln, das die Alkalihalogenide ohne die aufwendige Heißwasserwäsche entfernt und das zu direkt in die Slurries einsetzbaren Celluloseethern führt, die frei von korrosionsfördernden Alkalihalogeniden sind. Es war ein weiteres Ziel der Erfindung, gereinigte Celluloseether in einer solchen Form bereitzustellen, in der sie ohne aufwendige Verfahrensmaßnahmen in direkt mit den Slurries kompatibler Form vorliegen.

Das neue Verfahren zur Herstellung von zu versprühenden Slurries ist nun dadurch gekennzeichnet, daß man die Rohprodukte, die bei der Methylierung von Alkalicellulose anfallen, in 5 bis 25, insbesondere 6 bis 15 gewichtsprozentiger wäßriger Alkalisulfat- und/oder Alkaliphosphat- und/oder Alkalicarbonatlösung suspendiert und unter Rühren bei 10 bis 50 °C, vorzugsweise 15 bis 30 °C aufschlämmt, die Lösung vom Feststoff trennt und den Vorgang gegebenenfalls wiederholt und dann die erhaltene Aufschlämmung dem zu versprühenden Ansatz des Waschmittels zusetzt und die Zerstäubung in üblicher Weise in einem Zerstäubungsturm durchführt.

Die feuchten Filterkuchen beziehungsweise die Suspensionen der Celluloseether, die ja dann von der zur Reinigung benutzten Salzlösung noch Salze, jedoch andere als Alkalihalogenide, enthalten, lassen sich für den vorstehend genannten Zweck verwenden. Die Anwesenheit der Salze stört nicht, sie ist sogar erwünscht.

Das erfindungsgemäße Verfahren läßt sich vorteilhaft einsetzen zur Bereitstellung von Methylcellulose. Die Herstellung von Methylcellulose ist bekannt (vgl. DE-AS 14 68 048). Die nach den bekannten Verfahren anfallenden Rohprodukte enthalten neben Wasser noch erhebliche Mengen an Natriumchlorid. Der Gehalt an Natriumchlorid beträgt, bezogen auf trockene Methylcellulose, etwa 35 bis 55 Gew.%.

Folgende Salze sind für die erfindungsgemäßen Verfahren zur Herstellung von wäßrigen Suspensionen der Celluloseether geeignet: Natriumsulfat, Natriumcarbonat, Natriumhydrogencarbonat, tert. Natriumphosphat, Kaliumcarbonat, Dikaliumhydrogenphosphat, Kaliumdihydrogenphosphat.

Die Temperaturen der Waschlösungen sollen zwischen 10 und 50 °C betragen. Im allgemeinen wird man bei Temperaturen zwischen 15 und 30 °C arbeiten.

Die Behandlung der Rohcelluloseether mit den Salzlösungen kann erfolgen in üblichen Rührgefäßen, die sowohl intermittierend als auch in kontinuierlicher Betriebsweise mit stetigem Zulauf von Salzlösung und von Celluloseether vonstatten gehen. Solche Apparaturen sind als Pulper in der Altpapieraufbereitung üblich. Bei chargenweiser Behandlung wird der Celluloseether in den Salzlösungen aufgerührt und nach erfolgter Zerkleinerung die Waschsole abgelassen. In diesen Fällen kann man selbstverständlich den Waschvorgang mit den Salzlösungen wiederholen. Ferner ist der Einsatz von verschiedenen Salzen oder Mischsalzen in Form verschieden konzentrierter Lösungen möglich.

Im allgemeinen wird die Suspension direkt der Weiterverarbeitung zugeführt. Sie wird also dem Slurry, wie er für die Waschmittelherstellung benötigt wird, zugemischt und dann wird zur Gewinnung des pulverförmigen Waschmittels versprüht.

Es muß als überraschend und damit erfinderisch angesehen werden, daß man den an sich bekannten Umstand der Unlöslichkeit von ansonsten gut kaltwasserlöslichen Celluloseethern für die erfindungsgemäße technische Lehre ausnützen konnte. Es konnte nämlich nicht erwartet werden, daß beim Übergang von beispielsweise gereinigter, granulierter Methylcellulose als Zusatz zu den Waschmitteln zu den salzhaltigen Suspensionen der Methylcellulose die gleich guten Ergebnisse erhalten werden konnten. Obwohl die Unlöslichkeit der Celluloseether in Salzlösungen schon sehr lange bekannt waren, ist nie der Versuch gemacht worden, darauf ein spezielles Reinigungsverfahren aufzubauen und einen technologischen Fortschritt bei der Herstellung der Wasch- und Reinigungsmittel zu erzielen.

Beispiel 1

In einen Waschbehälter von 12 m³ Fassungsvermögen wurden 7 000 l 4-gewichtsprozentige Natriumsulfatlösung von 22 °C eingeführt. Außerdem wurden eine t feuchte, geschnitzelte, kochsalzhaltige, rohe Methylhydroxypropylcellulose eingefüllt (atro 350 kg ; vergl. DE-AS 14 68 048, Beispiel 2). Die rohe Methylhydroxypropylcellulose hatte einen DP von 120, was einer 2 %igen Brookfield-Viskosität von 50 mPa.s entspricht. Dann wurde der Behälter mit einem Rührwerk (2 000 upm), auf dessen Welle in gleichmäßigem Abstand 5 propellerartige Flügel angebracht waren, durchgerührt. Nach 15 Minuten waren alle Schnitzel in eine Fasersuspension überführt worden.

Anschließend wurde die Salzlösung durch ein am Boden des Waschbehälters angebrachtes Sieb abgelassen. Zurück blieb eine Methylhydroxypropylcellulose, die noch zweimal mit der gleichen Menge an 6 %iger Natriumsulfatlösung gewaschen wurde. Dann wurde 6 %ige Natriumsulfatlösung zugegeben, bis der Gesamtfeststoffgehalt 12 % betrug. Die anschließend in einen Vorratsbehälter übergepumpte Suspension wies eine Viskosität von 5 000 mPa.s nach Brookfield auf.

50 kg der auf diese Weise hergestellten Suspension wurde dem Slurry für ein bei 60 °C zu versprühendes Waschmittel zugegeben. Das Waschmittel hatte folgende Zusammensetzung :

    60 kg anionisches Tensid
    24 kg nichtionisches Tensid
    12 kg Seife
  180 kg Natriumtripolyphosphat
  180 kg Zeolith A
   18 kg Wasserglas
  120 kg Natriumsulfat
    6 kg Carboxymethylcellulose
  400 kg Wasser.

Beispiel 2

In einen in der Papierindustrie üblichen Pulper (Stofflöser) mit einem Nutzinhalt von 12 m³ wurden 7 000 l 5 %ige Natriumsulfatlösung eingefüllt. Die Motorleistung des Stofflösers betrug 100 kW, die Drehzahl des Auflöserades 425 U/min. 2,2 t rohe Methylcellulose aus einem Autoklaven, die in feuchter und kochsalzhaltiger und geschnitzelter Form vorlag, wurde eingetragen und neutralisiert. Die Methylcellulose hatte einen DP von 80, was einer Brookfield-Viskosität von 25 mPa.s entspricht.

Nach einer Rührzeit von 10 Minuten hatte sich eine homogene Fasersuspension gebildet und die Salzlösung wurde über eine am Boden des Pulpers befindliche Lochplatte abgezogen. Dann wurde der beschriebene Waschvorgang noch zweimal mit 6 %iger Natriumsulfatlösung wiederholt. Anschließend wurde die Methylcellulose mit 6 %iger Natriumsulfatlösung auf einen Feststoffgehalt von 13 Gew.% gebracht und in einen Vorratsbehälter gepumpt. Die Viskosität betrug jetzt 5 800 mPa.s.

50 kg der auf diese Weise hergestellten Methylcellulosesuspension wurde in einem bei 90 °C zu verstäubenden Waschmittelslurry eingearbeitet. Die Zusammensetzung betrug :

    47 kg anionisches Tensid
    30 kg nichtionisches Tensid
    20 kg Seife
  155 kg Natriumtripolyphosphat
  155 kg Zeolith A
   30 kg Wasserglas
  155 kg Natriumsulfat
    8 kg Carboxymethylcellulose
  400 kg Wasser.

Die Zerstäubung des Slurries erfolgte in der in der Praxis üblichen Form in einem Zerstäubungsturm.

**Anspruch**

Verfahren zur Herstellung von in an sich bekannter Weise zu versprühenden Slurries für die Herstellung von pulverförmigen Waschmitteln, dadurch gekennzeichnet, daß man die Rohprodukte, die bei der Methylierung von Alkalicellulose anfallen, in 5 bis 25, insbesondere 6 bis 15 gewichtsprozentiger wäßriger Alkalisulfat- und/oder Alkaliphosphat- und/oder Alkalicarbonatlösung suspendiert und unter Rühren bei 10 bis 50 °C, vorzugsweise 15 bis 30 °C aufschlämmt, die Lösung vom Feststoff trennt und den Vorgang gegebenenfalls wiederholt und dann die erhaltene Aufschlämmung dem zu versprühenden Ansatz des Waschmittels zusetzt und die Zerstäubung in üblicher Weise in einem Zerstäubungsturm durchführt.

**Claim**

A process for the production of slurries to be sprayed in known manner for the production of powderform detergents, characterized in that the crude products accumulating during the methylation of alkali cellulose are introduced into a 5 to 25 % by weight and, more particularly, 6 to 15 % by weight aqueous alkali sulfate and/or alkali phosphate and/or alkali carbonate solution and suspended while stirring at 10 to 50 °C and preferably at 15 to 30 °C, the solution is separated from the solids and the operation is optionally repeated, after which the suspension obtained is added to the detergent mixture to be sprayed and spraying is carried out in the usual way in a spray tower.

## Revendication

Procédé de fabrication de suspensions à pulvériser d'une manière connue en elle-même pour la fabrication d'agents de lavage pulvérulents, caractérisé en ce qu'on met en suspension les produits bruts, que l'on rencontre dans la méthylation de l'alcali-cellulose, dans une solution à 5 à 25, en particulier à 6 à 15 % en poids de solution aqueuse de sulfate alcalin et/ou de phosphate alcalin et/ou de carbonate alcalin, et on la désagrège sous agitation à 10-50 °C, de préférence à 15-30 °C, on sépare la solution d'avec la matière solide en répétant éventuellement le processus, puis on ajoute la matière désagrégée obtenue à la charge d'agent de lavage devant être pulvérisée et exécute la pulvérisation de la manière usuelle dans une tour de pulvérisation.